# EUROPEAN PATENT APPLICATION

(11) **EP 1 133 134 A2**
(43) Date of publication of application: **12.09.2001**
(21) Application number: 01302182.9
(22) Date of filing: 09.03.2001
(51) Int. Cl.: H04M 1/253, H04M 1/65, H04M 1/725

(54) **Telephone apparatus**

(30) Priority: 10.03.2000 JP 2000066974; 24.03.2000 JP 2000084474
(71) Applicant: SONY CORPORATION, Tokyo (JP)
(72) Inventor: Yamagata, Masato, Shinagawa-ku, Tokyo (JP); Hasegawa, Kiyoshi, Shinagawa-ku, Tokyo (JP)
(74) Representative: Nicholls, Michael John

(57) **Abstract**

In a telephone apparatus which is capable of simultaneously making telephone calls of two systems through a single subscriber's line and is under a plurality of dial-in contracts, two recording processing means 23, 24 capable of recording different telephone calls are provided so that, even if an incoming call of one of the above two systems is being recorded, another incoming call of the other system can be recorded.

## Description

The present invention relates to a telephone apparatus which is such as an ISDN (Integrated Services Digital Network) telephone apparatus which is capable of simultaneously making telephone calls or communications of two systems through a single subscriber's line and can be under a plurality of dial-in telephone contracts.

According to the ISDN line which has been used in recent years, telephone calls of two systems can be made simultaneously through a single subscriber's line and a plurality of, for example, up to ten dial-in contracts can be made. Some ISDN line telephone apparatus available on the market have the answering telephone functions.

In other words, when another incoming call of the second system arrives, the line becomes busy inconveniently when a user is absent.

In view of the above-mentioned point, the present invention aims to provide a telephone apparatus in which an automatic answering tale phone function can be performed even if another incoming call of a second system arrives while a call's message of an incoming call of a first system is being recorded.

According to a telephone apparatus of the present invention, a telephone apparatus which is capable of making telephone calls of two systems through a single subscriber's line and is under a plurality of dial-in contracts includes two recording processing means capable of recording different telephone communications so that, even if an incoming call of one of the two systems is being recorded, an another incoming call of the other system can be recorded.

According to the present invention, since the telephone apparatus includes the two recording processing means capable of recording different telephone calls, even if one of the two systems is engaged in communication, a telephone communication of the other system can be recorded. Thus, according to the present invention, while a caller's message of an incoming call of one system received during a user's absence is being recorded (answering tale phone function is being carried out), even though another incoming call of the other system arrives can also be achieved the answering tale phone function.

The invention will be further described by way of example with reference to the accompanying drawings, in which:-
FIG. 1 is a block diagram showing a structure example of a telephone apparatus according to an embodiment of the present invention;
FIG. 2 is ablock diagram showing a structure example of a remote station;
FIG. 3 is a flow chart for explaining the present invention;
FIG. 4 is a diagram for explaining the present invention; and
FIG. 5 is a flow chart for explaining the present invention.

### DESCRIPTION OF THE PREFERRED EMBODIMENTS

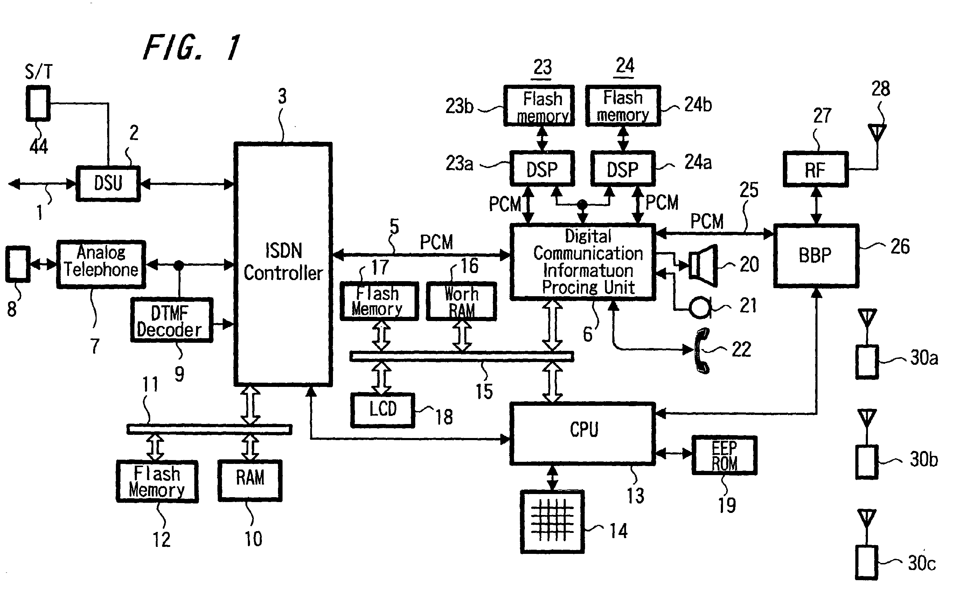

A telephone apparatus according to an embodiment of the present invention will be described below with reference to the drawings. In FIG. 1, a reference numeral 1 denotes a telephone subscriber's line which is an ISDN line from a telephone office (not shown). This ISDN line 1 is connected to a digital service unit (DSU) 2 located within a user's home. This ISDN line 1 is capable of making telephone calls of two systems simultaneously through a single subscriber's line and can also have a plurality of, for example, up to ten dial-in contracts.

This digital service unit (DSU) 2 is connected to an ISDN controller 3. A reference numeral 4 denotes a parallel connection terminal which is used to connect other ISDN controllers to this digital service unit (DSU) 2.

This ISDN controller 3 acquires, for example, a PCM digital communication information signal out of a signal received through the digital service unit (DSU) 2 from the ISDN line 1, supplies the PCM digital communication information signal through a two-way transmission line 5 to a digital communication information processing circuit 6, and sends out, for example, a PCM digital communication information signal to be transmitted from the digital communication information processing circuit 6 through the digital service unit (DSU) 2 to the ISDN line 1.

The ISDN controller 3 is connected through a subscriber circuit (SLIC) 7 to an analog telephone set 8 so that this analog telephone set 8 can also transmit and receive communication information through the ISDN line 1. A reference numeral 9 denotes a DTMF decoder. This decoder decodes a DTMF signal from the analog telephone set 8 and supplies the signal thus decoded to the ISDN controller 3. Then, the ISDN controller 3 sends out a call signal corresponding to this DTMF signal to the ISDN line 1.

A reference numeral 10 denotes a work RAM connected to the ISDN controller 3 through a bus line 11. A memory 12 in which a predetermined program and the like are stored is connected to the ISDN controller 3 through this bus line 11.

A reference numeral 13 denotes a central processing unit (CPU) comprised of a microcomputer. The ISDN controller 3 is adapted to operate in accordance with commands from this central processing unit 13.

A keyboard 14 for inputting tale phone numbers or the like is connected to this central processing unit 13. A work RAM 16, a memory 17 in which a predetermined program and the like are stored and a liquid crystal display (LCD) 18 for displaying data and messages in a predetermined manner are also connected to the central processing unit 13 through a bus line 15. An EEPROM 19 in which a tale phone book and the like are stored is also connected to this central processing unit 13.

This central processing unit 13 is connected with the digital communication information processing circuit 6 through the bus line 15 so that the digital communication information processing circuit 6 may execute digital communication information processing in cooperation with the central processing unit 13.

This digital communication information processing circuit 6 includes a speaker 20 for emanating a received signal as sound, and a microphone 21 for generating a transmitting signal as well as a handset 22 including a microphone and a speaker so that an audio signal can be transmitted and received when a handsfree function is carried out in the same manner as before.

In this embodiment, two recording processing means 23 and 24 capable of recording different telephone communications are connected to the digital communication information processing circuit 6. The recording processing means 23 and 24 are comprised of digital signal processors (DSPs) 23a and 24a as well as memories 23b and 24b, respectively .

The digital signal processors (DSPs) 23a and 24a are supplied with a digital communication information signal which is outputted by the digital communication information processing circuit 6 in accordance with commands from the central processing unit 13. The digital signal processors (DSPs) 23a and 24a record (store) this digital communication information signal in the memories 23b and 24b in accordance with commands from the central processing unit 13, reproduce the signals recorded (stored) in the memories 23b and 24b, and supply the reproduced signals to the digital communication information processing circuit 6, thus causing the reproduced signals to be emanated as sound from the speaker 20.

In other words, according to this embodiment, the digital signal processors (DSPs) 23a, 24a record a caller's message in the memories 23b, 24b in accordance with the commands from the central processing unit 13, and reproduce the message signal recorded in the memories 23b, 24b in accordance with commands from the central processing unit 13, thus causing the recorded message signal to be emanated as sound from the speaker 20.

Moreover, the digital signal processors (DSPs) 23a, 24a have an echo-cancel function so as to prevent a howling noise from being produced between the speaker 20 and the microphone 21 while a user is operating the speaker 20 or the like to carry out the handsfree function.

The received digital communication information signal obtained at the digital communication information processing circuit 6 is supplied through a two-way transmission line 25 to a baseband processor (BBP) 26 which comprises a digital modulator, a digital demodulator or the like and which communicates with three remote stations 30a, 30b, 30c, for example. The digital communication information signals transmitted from the remote stations 30a, 30b, 30c to the baseband processors (BBP) 26 are supplied to this digital communication information processing circuit 6.

This baseband processor (BBP) 26 is adapted to operate in accordance with commands from the central processing unit 13. The received and digitally modulated digital communication information signal from the baseband processor (BBP) 26 is transmitted through a high-frequency circuit 27 and an antenna 28 to the remote stations 30a, 30b, 30c by radio, and signals transmitted from the remote stations 30a, 30b, 30c by radio are supplied through the antenna 28 and the high-frequency circuit 27 to the baseband processor (BBP) 26.

In this embodiment, the dial-in contracts are made between the telephone apparatus and the three remote stations 30a, 30b and 30c, and dial-in numbers "A", "B" and "C" are allocated to the corresponding three remote stations 30a, 30b, 30c, respectively. The dial-in numbers "A", "B" and "C" are numbers of predetermined figures in actual practice.

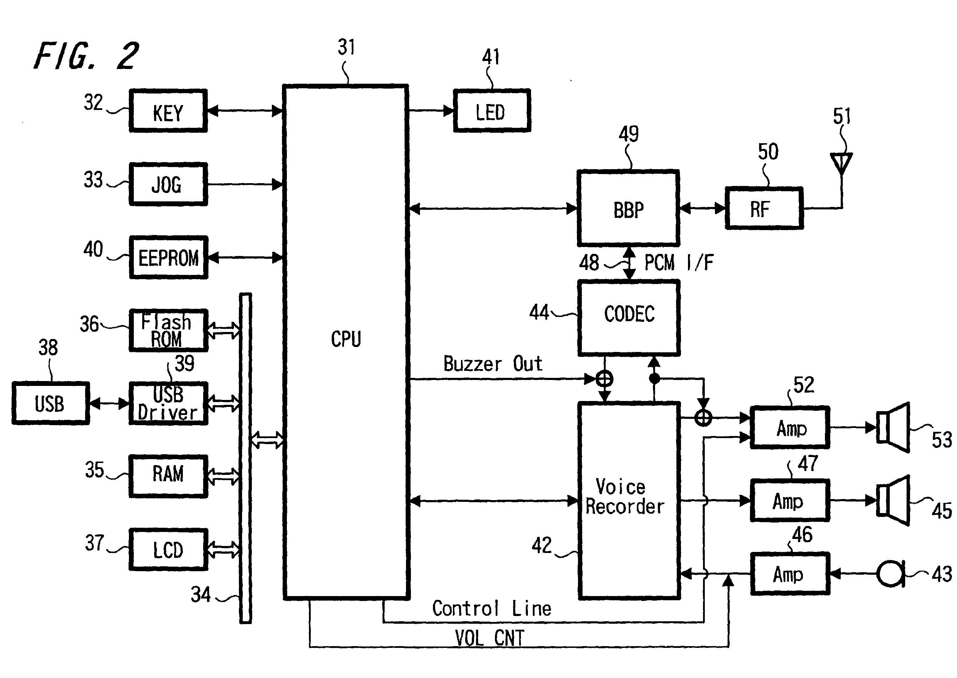

Each of the remote stations 30a, 30b and 30c has the structure as shown in FIG. 2 for example. In FIG. 2, a reference numeral 31 denotes a central processing unit (CPU) comprised of a microcomputer. A keyboard 32 for inputting tale phone numbers or the like or a jog dial 33 are connected to this central processing unit 33. A work RAM 35, a memory 36 storing a predetermined program or the like, a liquid crystal display device (LCD) 37 making a predetermined display and a USB driver 39 connected with a USB (Universal Serial Bus) interface 38 for connecting a personal or computer or the like are also connected to this central processing unit through a bus line 34.

An EEPROM 40 for storing therein a tale phone book or the like is connected to this central processing unit 31, and a light emitting diode 41 for indicating that the remote stations 30a, 30b, 30c and so on are operating is also connected to the central processing unit.

A reference numeral 42 denotes a voice recorder which is comprised of a cross-point switch or the like and operates in accordance with commands from this central processing unit 31. This voice recorder 42 supplies an audio signal from a microphone 43 for transmission to a codec circuit 44 which encodes this analog audio signal into a PCM audio signal which is a digital signal. An audio signal which results from decoding a PCM audio signal, which is a received digital signal, by the codec circuit 44 is supplied from the codec circuit 44 through the voice recorder 42 and an amplifying circuit 52 to a telephone receiver unit 53. A reference numeral 46 denotes an amplifying circuit.

This codec circuit 44 is connected through a two-way transmission line 48 to a baseband processor (BBP) 49 which comprises digital modulator, a digital demodulator or the like and which is communicates with a so-called master station as shown in FIG. 1. This baseband processor (BBP) 49 is adapted to operate in accordance with commands from the central processing unit 31. A digitally modulated audio signal for transmission from the codec circuit 44 is transmitted from the baseband processor (BBP) 49 through a high-frequency circuit 50 and an antenna 51 by radio.

An incoming signal transmitted through the ISDN line 1 from the master station as shown in FIG. 1 by radio is supplied through the antenna 51 and the high-frequency circuit 50 to the baseband processor (BBP) 49. The incoming signal supplied to the baseband processor (BBP) 49 is further supplied through the codec circuit 44, the voice recorder 42 and the amplifying circuit 52 controlled by the central processing unit 31 to the telephone receiver unit 53 for emanating it as sound.

In the example shown in FIG. 2, when an incoming call arrives, a buzzer signal is outputted from this central processing unit 31 to be emanated as sound from the speaker 45. At the same time, a predetermined announce signal recorded in the voice recorder 42 is supplied through an amplifying circuit 47 to the speaker 45 under the control of the central processing unit 31, for emanating a sound message for example," A call for you from...", for emanating it as sound message.

In this embodiment, the sound volume of the microphone 43 is adjusted in accordance with commands from the central processing unit 31. The others are constructed in the same way as before.

Since the telephone apparatus according to this embodiment has the above structure, when a user telephones from the so-called master station, the user can telephone using the speaker 20 and the microphone 21 or the handset 22 in the same way as before. Also,the user can telephone using the analog telephone set 8 in the same way as before.

Moreover, when a user telephones using the remote stations 30a, 30b and 30c, the user can telephone by using the respective dial-in numbers by radio through this master station in the same way as before.

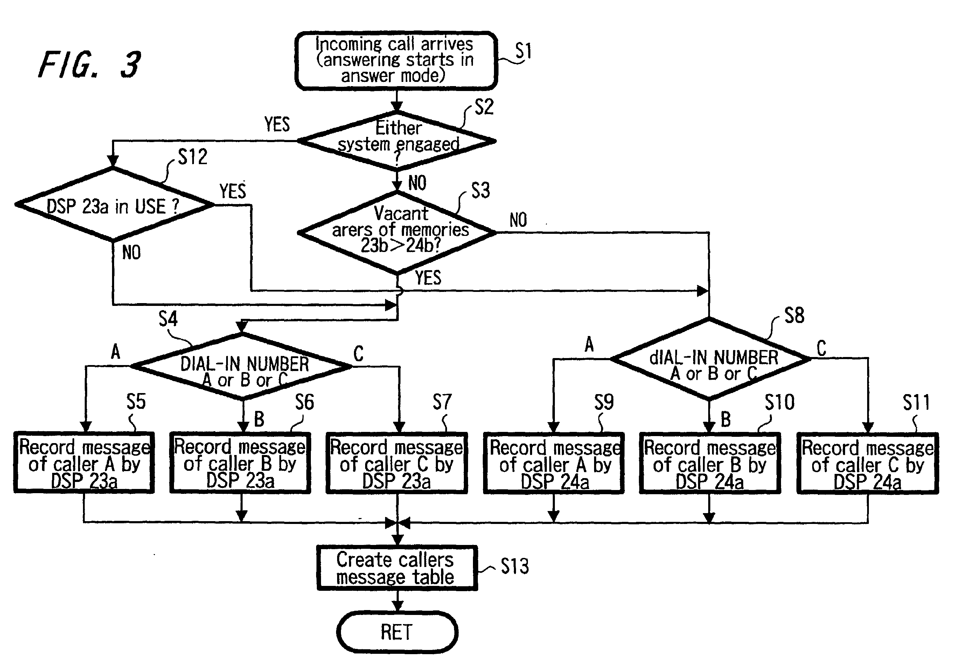

In this embodiment, when a user sets this telephone apparatus in an answering telephone mode, this telephone apparatus is adapted to operate as shown in a flow chart of FIG. 3 under the control of the central processing unit (CPU) 13. When an incoming call arrives through the ISDN line 1 (step S1), it is determined whether or not either of the two communication systems is engaged in communication (step S2).

If neither of the two communication systems are engaged in communication, it is determined whether or not vacant areas of the memories 23b and 24b of the recording processing means 23 and 24 satisfy the following relation (step S3) :
memory 23b > memory 24b
If it is determined that the vacant area of the memory 23b is larger, then operation goes to a step S4 where it is determined whether the dial-in number is "A", "B" or "C".

If it is determined that the dial-in number is "A", then operation goes to a step S5, where an answering message to the calling partner A previously recorded in the memory 23b is reproduced by the digital signal processor (DSP) 23a transmission, and a message of the calling partner A is recorded in the memory 23b using the digital signal processor (DSP) 23a of the recording processing means 23.

If it is determined that the dial-in number is "B", then operation goes to a step S6, where an answering message to the calling partner B previously recorded in the memory 23b is reproduced by the digital signal processor (DSP) 23a for transmission, and a message of the calling partner B is recorded in the memory 23b by using the digital signal processor (DSP) 23a of the recording processing means 23.

If it is determined that the dial-in number is "C", then operation goes to a step S7 where an answering message to the calling partner C previously recorded in the memory 23b is reproduced by the digital signal processor (DSP) 23a for transmission, and a message of the calling partner C is recorded in the memory 23b using the digital signal processor (DSP) 23a of the recording processing means 23.

If it is determined at the step S3 that the vacant area of the memory 24b is larger, then operation goes to a step S8 where it is determined whether the dial-in number is "A", "B" or "C".

If it is determined that the dial-in number is "A", then operation goes to a step S9 where an answering message to the calling partner A previously recorded in the memory 24b is reproduced by the digital signal processor (DSP) 24a for transmission, and a message of the calling partner A is recorded on the memory 24b using the digital signal processor (DSP) 24a of the recording processing means 24.

If it is determined that the dial-in number is "B", then operation goes to a step S10 where an answering message to the calling partner B previously recorded in the memory 24b is reproduced by the digital signal processor (DSP) 24a for transmission, and a message of the calling partner B is recorded in the memory 24b by using the digital signal processor (DSP) 24a of the recording processing means 24.

If it is determined that the dial-in number is "C", then operation goes to a step S11 where an answering message to the calling partner C previously recorded in the memory 24b is reproduced by the digital signal processor (DSP) 24a for transmission, and a message of the calling partner C is recorded in the memory 24b using the digital signal processor (DSP) 24a of the recording processing means 24.

If it is determined at the step S2 that either communication system is engaged in communication, then it is determined whether or not the digital signal processor (DSP) 23a of the recording processing means 23 is in use (step S12). If it is determined that this digital signal processor (DSP) 23a is in use, then operation goes to the step S8. If not, then control goes to the step S4. Accordingly, even if either communication system is engaged in telephone communication, a telephone call of the other system can be recorded.

Therefore, there can be achieved the two answering telephone functions at the same time. While one system is engaged with the handsfree function, and besides one digital signal processor (DSP) 23a or 24a is in use, the answering telephone function can be operated using the other digital signal processor (DSP) 24a or 23a.

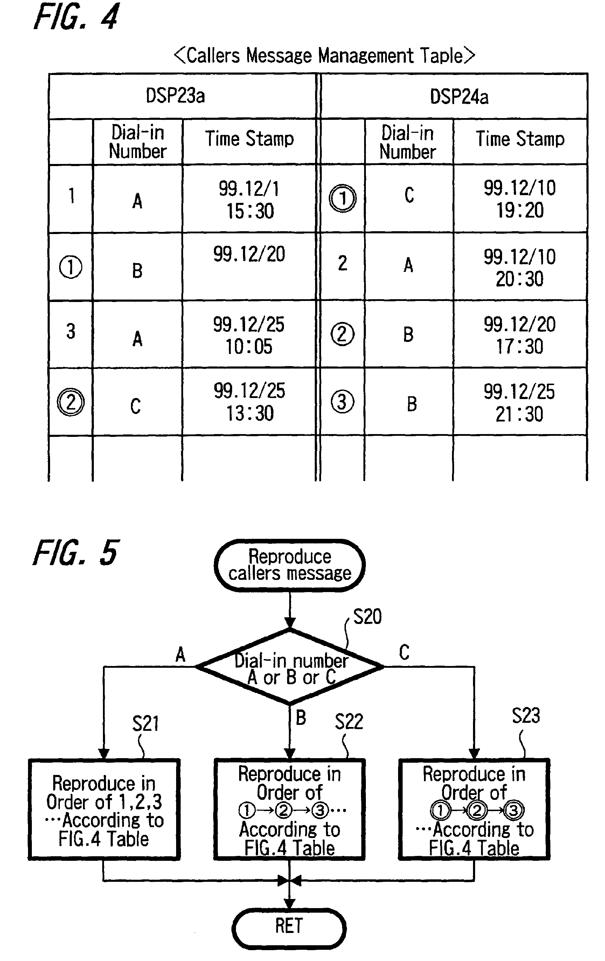

When telephone messages are recorded in the memories 23b and 24b by using the digital signal processors (DSPs) 23a and 24a at the steps S5, S6, S7, S9, S10 and S11, a caller's message management table as shown in FIG. 4 is created (step S13) under control of the central processing unit (CPU) 13 to be stored in the memory 17 for example. Then, operation ends is ended, and the telephone apparatus is put in a standby mode for awaiting the next incoming call.

As shown in FIG. 4, this caller's message management table is a table indicating which digital signal processor (DSP) 23a or 24a was used and for which dial-in number "A" or "B" of "C" and when the caller's message were recorded, namely, the date and with time and date by using and time of its recording.

When caller's messages recorded in the memories 23b and 24b are reproduced, it is determined whether the dial-in number of the caller's message to be reproduced is "A", "B" or "C" (step S20). If the dial-in number is "A", then the caller's messages of the dial-in number "A" on the caller's message management table shown in FIG. 4 stored in the memory 17 are reproduced in order of time stamp using the digital signal processors (DSPs) 23a and 24a and for emanating as sound from the speaker 20 (step S21).

If it is determined at the step S20 that the dial-in number of the recorded caller's message to be reproduced is "B", then the caller's messages of the dial-in number "B" on the caller's message management table shown in FIG. 4 recorded in the memory 17 are reproduced back in order of time stamp using the digital signal processors (DSPs) 23a and 24a for emanating as sound from the speaker 20 (step S22).

If it is determined at the step S20 that the dial-in number of the recorded caller's message to be reproduced is "C", then the caller's messages of the dial-in number "C" on the automatic answering message management table shown in FIG. 4 recorded in the memory 17 are reproduced in order of time stamp using the digital signal processors (DSPs) 23a and 24a for emanating as sound from the speaker 20 (step S23).

While the telephone apparatus in the above embodiment is under the three dial-in contracts, the present invention is not limited thereto, and the telephone apparatus may, of course, be under two or more than four dial-in contracts.

It is needless to say that the present invention is not limited to the above embodiment and can take various modifications without departing from the gist of the present invention.

According to the present invention, since the telephone apparatus includes the two recording processing means capable of recording different telephone calls, even if another incoming call of one system of the two systems is being recorded incoming call of the other can be recorded

Therefore, according to the present invention, while a caller's message of a first system received during a user's absence is being recorded (answering telephone function is being carried out), even when an incoming call of a second system arrives,the answering telephone function can be achieved.

Having described preferred embodiments of the present invention with reference to the accompanying drawings, it is to be understood that the present invention is not limited to the above-mentioned embodiments and that various changes and modifications can be effected therein by one skilled in the art without departing from the spirit or scope of the present invention as defined in the appended claims.

## Claims

1. A telephone apparatus which is capable of simultaneously making telephone calls of two systems through a single subscriber's line under a plurality of dial-in telephone contracts made therewith, said telephone apparatus being **characterized in that**
two recording processing means capable of recording different telephone calls are provided so that even if an incoming call of one of said two systems is being recorded an incoming call of the other system can be recorded.

2. A telephone apparatus according to claim 1, **characterized in that**
said recording processing means is each comprised of a digital signal processor (DSP) and a memory.

3. A telephone apparatus according to claim 1 or 2, **characterized in that**
said recording processing means are respectively provided with answer message transmitting means for transmitting answer messages.

4. A telephone apparatus according to claim 2, **characterized in that**
said telephone call is recorded in one of said memories of said two recording processing means, vacant memory a storage capacity is larger than the other memory.

5. A telephone apparatus according to any one of claims 1 to 4, **characterized in that**
said recording processing means have echo-cancel function so that even if a speaker phone is being used in a telephone call of one system another telephone call of the other system can be recorded by said recording processing means.

6. A telephone apparatus according to any one of the preceding claims, **characterized in that**
telephone calls recorded by said recording processing means are reproduced in the order of recordal.
